# EUROPÄISCHE PATENTSCHRIFT

(11) **EP 0 551 458 B1**
(45) Veröffentlichungstag und Bekanntmachung des Hinweises auf die Patenterteilung: **10.05.1995**
(21) Anmeldenummer: 92912778.5
(22) Anmeldetag: 29.06.1992
(51) Int. Cl.: C03C 17/23, C03C 23/00, C09K 11/74, C09K 11/57, C09K 11/78, H01J 9/22, C03C 25/02, G21K 4/00

(54) **VERFAHREN ZUR HERSTELLUNG EINER LEUCHTSTOFFSCHICHT AUF EINEM SUBSTRAT**
PROCESS FOR PRODUCING A FLUORESCENT COATING ON A SUBSTRATE
PROCEDE D'APPLICATION D'UNE COUCHE DE SUBSTANCE LUMINESCENTE SUR UN SUBSTRAT

(30) Priorität: 30.07.1991 DE 4125200
(43) Veröffentlichungstag der Anmeldung: 21.07.1993
(73) Patentinhaber: SIEMENS AKTIENGESELLSCHAFT, 80333 München (DE)
(72) Erfinder: GRABMAIER, Christa, D-8137 Berg 1 (DE); BERTHOLD, Thomas, D-8000 München 45 (DE)
(86) Internationale Anmeldenummer: DE9200534
(87) Internationale Veröffentlichungsnummer: WO9302982

(56) Entgegenhaltungen:
- GB-A- 1 113 101
- GB-A- 1 225 434
- US-A- 2 219 895
- US-A- 2 408 475
- MATERIALS RESEARCH BULLETIN. Bd. 24, Nr. 2, Februar 1989, OXFORD GB Seiten 175- 179 RYUICHI MORIMO ET AL. 'PREPARATION OF ZNSIO4:MN PHOSPHORS BY ALKOXIDE METHOD'

## Beschreibung

Röntgenstrahlung kann mit Hilfe von Szintillatoren in sichtbares Licht umgewandelt werden. Dieses sichtbare Licht kann dann von Photodetektoren registriert werden. Diese Szintillatoren werden z. B. bei medizinischen Röntgenaufnahmen eingesetzt.

Als Szintillator wird vielfach eine Leuchtstoffschicht, die auf einem Substrat aus Glas angeordnet ist, verwendet. Neben einer guten Lichtausbeute, einer eng definierten Korngröße und Schichtdicke der Leuchtstoffschicht ist dabei eine gute Haftung der Leuchtstoffschicht auf dem Substrat wichtig.

Zur Messung der Intensitätsverteilung eines breiten Röntgenstrahlbündels, z. B. bei medizinischen Röntgenaufnahmen, ist eine Ortsauflösung in der Ebene der zu messenden Intensitätsverteilung erforderlich. Dazu werden im allgemeinen kleine Szintillatoren verwendet, die nebeneinander angeordnet sind. In Richtung der Strahlungsausbreitung der Röntgenstrahlung müssen diese Szintillatoren so dick sein, daß sie durch Absorption der Röntgenstrahlung die Photodetektoren vor Strahlenschäden schützen.

Es ist bekannt, Leuchtstoffschichten durch Aufdampfen, Siebdruck oder Sedimentation von Leuchtstoffen auf ein Substrat herzustellen. Der technische Aufwand und die Störanfälligkeit dieser Verfahren ist im allgemeinen hoch. Eine gute Haftung der Leuchtstoffschicht auf dem Substrat kann nur erzielt werden, wenn die Substrate sorgfältig gereinigt werden. Der Leuchtstoff wird als Pulver aufgebracht. Schon das Pulver hat die für die Leuchtstoffschicht erforderliche chemische Zusammensetzung. Dieses Pulver muß zuvor in meist aufwendigen Verfahren hergestellt werden. Um eine gleichmäßige Schichtdicke der Leuchtstoffschicht zu erzielen, darf das Substrat möglichst kein Profil aufweisen.

Es ist bekannt, Szintillatoren in Form von Schichten aus senkrecht zur Schicht angeordneten Kristallnadeln herzustellen. Die Kristallnadeln bestehen z. B. aus CsJ:Na. Die Nadeln müssen dabei in Richtung des einfallenden Röntgenstrahls so große Abmessungen aufweisen, daß das Röntgenlicht weitgehend absorbiert wird. Die Ortsauflösung wird durch den Durchmesser der Nadeln senkrecht zur Einfallsrichtung der Röntgenstrahlung bestimmt. In diesen Szintillatoren wird der größte Teil des Röntgenlichts im ersten Drittel des Szintillatorkristalls in Lumineszenzlicht umgewandelt. Im übrigen Teil des Kristalls wird die noch nicht absorbierte Strahlung soweit abgeschwächt, daß die Photodetektoren von Strahlenschäden geschützt werden. Die Schichten müssen daher im Vergleich zu ihrer Lichtausbeute unverhältnismäßig dick hergestellt werden.

Der Erfindung liegt das Problem zugrunde, ein Verfahren zur Herstellung von Leuchtstoffschichten anzugeben, mit dem gleichmäßige Leuchtstoffschichten auch auf unebenen oder beliebig strukturierten Substraten herstellbar sind. Mit dem Verfahren soll es insbesondere möglich sein, sowohl Leuchtstoffschichten für großflächige Detektoren als auch für Szintillatoren mit einer hohen Ortsauflösung herzustellen.

Das Problem wird erfindungsgemäß gelöst in einem Verfahren nach Anspruch 1. Die Leuchtstoffschicht wird durch Reaktion von einer Ausgangssubstanz, die als Schicht auf ein Substrat aus SiO₂-Glas aufgebracht wird, mit dem SiO₂ aus der Substratoberfläche hergestellt. Sie weist daher eine sehr gute Haftung auf der Oberfläche des Substrats auf. Des weiteren wird die Leuchtstoffschicht in einer gleichmäßigen Dicke erzeugt.

In dem erfindungsgemäßen Verfahren können z. B. Leuchtstoffschichten aus Zinksilikat, Wismutsilikat oder Silikaten der seltenen Erden hergestellt werden. Für technische Anwendungen sind dabei Zinksilikat und Gadoliniumsilikat besonders wichtig.

Die Ausgangssubstanz wird gemeinsam mit Dotierstoffen als Schicht auf das Substrat aus SiO₂-Glas aufgebracht. Die Schicht kann durch Aufdampfen, Sprühen, Siebdruck oder Schlickerguß erzeugt werden. Die besten Ergebnisse bezüglich Gleichmäßigkeit der Schicht werden durch Aufdampfen erzielt.

Als Substrat muß ein SiO₂-Glas verwendet werden, dessen Erweichungspunkt oberhalb der Reaktionstemperatur liegt. Insbesondere Quarzglas ist dafür besonders geeignet.

Es liegt im Rahmen der Erfindung, daß die Schicht aus der dotierten Ausgangssubstanz ein Oxid der Ausgangssubstanz enthält.

Bei Durchführung des Verfahrens mit Zink (Zn) als Ausgangssubstanz wird der Temperprozeß bei mindestens 900 °C durchgeführt. Dabei ist es vorteilhaft, die Reaktion bei 1200 °C durchzuführen, um eine größere Reaktionsrate zu erzielen. Als Dotierstoff wird bei der Ausgangssubstanz Zn z. B. Bi oder Mn verwendet.

Bei Durchführung des Verfahrens der Ausgangssubstanz Gadolinium (Gd) wird der Temperprozeß bei mindestens 900 °C durchgeführt. Gute Ergebnisse werden bei 1200 °C erzielt. Als Dotierstoff eignet sich in diesem Fall ein Element der seltenen Erden, insbesondere Pr oder Tb, oder ein Oxid der seltenen Erden.

Um Sprünge in dem Substrat zu vermeiden, ist es vorteilhaft die Leuchtstoffschicht nach dem Temperprozeß kontrolliert abzukühlen. Dabei wird der Temperaturbereich zwischen 500 °C und 200 °C mit weniger als 100 °C pro Stunde durchlaufen. Diese Maßnahme ist besonders bei großflächigen Substraten wichtig.

Zur Herstellung von großflächigen Szintillatoren wird die Leuchtstoffschicht auf entsprechend große SiO₂-Glasplatten aufgebracht.

Es liegt im Rahmen der Erfindug, als Substrat Lichtleiterfasern aus SiO₂-Glas zu verwenden. Diese können einzeln oder in einem Faserbündel behandelt werden. Die Schicht aus der dotierten Ausgangssubstanz wird dabei jeweils auf eine Stirnfläche einer Lichtleiterfaser aufgebracht. Wegen der geometrischen Abmessung ist es dabei günstig, die Ausgangssubstanzen durch Aufdampfen aufzubringen. Durch Reaktion der Ausgangssubstanzen mit dem SiO₂ in Sauerstoffatmosphäre wird das mit der Schicht versehene Ende der Lichtleiterfaser in ein Szintillationselement umgewandelt. Die Ortsauflösung des Szintillationselements wird durch den Durchmesser der Lichtleiterfaser bestimmt. Ein Szintillationszähler, der aus einer Vielzahl nebeneinander angeordneter Lichtleiterfasern mit nach dem erfindungsgemäßen Verfahren hergestellten Leuchtstoffschichten aufgebaut ist, weist daher eine sehr gleichmäßige Ortsauflösung auf. Diese ist technisch einfach und zuverlässig über den Durchmesser der verwendeten Lichtleiterfasern einzustellen.

In der Leuchtstoffschicht wird Röntgenstrahlung in Lumineszenzlicht umgewandelt. Die restliche, nicht in Lumineszenzlicht umgewandelte Röntgenstrahlung wird in der sich anschließenden Lichtleiterfaser absorbiert. In dieser Ausführungsform wird die Dicke der Leuchtstoffschicht so optimiert, daß in ihr Lumineszenzlicht in für die Detektion ausreichender Menge erzeugt wird. Die Länge der Lichtleiterfaser wird so gewählt, daß die restliche Röntgenstrahlung im wesentlichen vor dem Eintritt in einen hinter dem Lichtleiter angeordneten Photodetektor absorbiert ist. Im Gegensatz zur herkömmlichen Technik brauchen die Photodetektoren nicht unmittelbar hinter den Szintillatorelementen angeordnet werden.

Durch Verwendung von monomodigen Lichtleiterfasern ist es möglich, Lichtanteile mit anderer Wellenlänge als das Nutzlicht aus der Glasfaser zu entfernen. Auf diese Weise können Lumineszenzwellen mit zu langer Abklingzeit unterdrückt werden, wenn sie sich in ihrer Wellenlänge hinreichend von dem Lumineszenzlicht mit kurzer Abklingzeit unterscheiden.

Im folgenden wird die Erfindung anhand von Ausführungsbeispielen und der Figuren näher erläutert.
- Fig. 1 und Fig. 2: zeigt die Herstellung einer Leuchtstoffschicht auf einer Glasplatte.
- Fig. 3 und Fig. 4: zeigt die Herstellung einer Leuchtstoffschicht auf der Stirnfläche einer Lichtleiterfaser.
- Fig. 5: zeigt ein Lichtleiterfaserbündel.

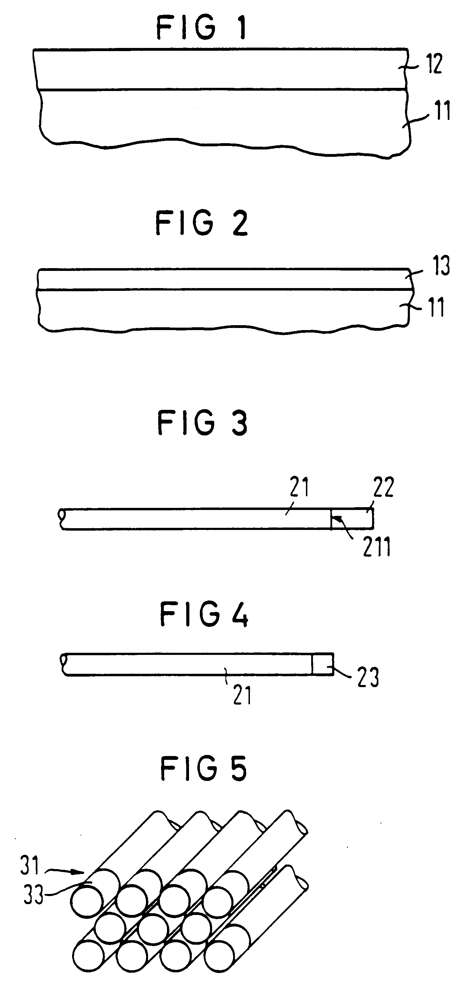

Auf ein Substrat 11 wird eine Schicht 12 einer dotierten Ausgangssubstanz aufgebracht (s. Fig. 1). Das Substrat 11 ist eine Glasplatte aus SiO₂-Glas.

Die Schicht 12 der dotierten Ausgangssubstanz steht z. B. aus mit Mn oder Bi dotiertem Zink.

In oxidierender Atmosphäre wird das Substrat 11 mit der Schicht 12 anschließend bei mindestens 900 °C etwa 3 Stunden lang getempert. Das Substrat 11 muß dabei aus einer solchen SiO₂-Glassorte bestehen, deren Erweichungspunkt oberhalb der Reaktionstemperatur der Temperung liegt. Dabei entsteht zunächst aus Zn ZnO und dann durch Reaktion mit dem SiO₂ des Substrats 11 Zn₂SiO₄. Als oxidierende Atmosphäre ist sowohl reiner Sauerstoff als auch Luft geeignet. Dadurch entsteht auf dem Substrat eine Leuchtstoffschicht 13 aus Zn₂SiO₄ (s. Fig. 2). Die Leuchtstoffschicht 13 ist feinkörnig und haftet fest auf dem Substrat. Bei Bestrahlung mit Elektronen, UV-Licht oder Röntgenstrahlung leuchtet sehr intensiv, wenn sie entsprechend mit Mn oder Bi dotiert wurde. Dabei empfiehlt sich eine Dotierstoffkonzentration im Bereich von 0,1 - 5 mol% .

Die Schicht 12 kann z. B. auch aus dotiertem ZnO aufgedampft werden. Durch anschließendes Tempern oberhalb von 900 °C in einer Sauerstoffatmosphäre, d. h. in reinem Sauerstoff oder in Luft, wird dann die Leuchtstoffschicht 13 aus Zn₂SiO₄ hergestellt.

In einem dritten Ausführungsbeispiel wird die Schicht 2 aus dotiertem Gadolinium aufgebracht. Durch Tempern oberhalb von 900 °C in Sauerstoffatmosphäre, d. h. in reinem Sauerstoff oder in Luft, wird Gadolinium zu Gadoliniumoxid oxidiert. Das Gadoliniumoxid reagiert mit SiO₂ des Substrats 11 zu Gadoliniumsilikat der Leuchtstoffschicht 13.

In einem vierten Ausführungsbeispiel wird die Schicht 12 durch Aufdampfen von Gadoliniumoxid gebildet. Durch Tempern, wie im dritten Ausführungsbeispiel beschrieben, reagiert das Gadoliniumoxid mit SiO₂ des Substrats 11 zu Gadoliniumsilikat, das die Leuchtstoffschicht 13 bildet.

Um Spannungen in dem Substrat 11 zu vermeiden, ist es in allen vier Ausführungsbeispielen vorteilhaft, beim Abkühlen den Temperaturbereich zwischen 500 °C und 200 °C mit weniger als 100 °C pro Stunde zu durchlaufen.

In einem weiteren Ausführungsbeispiel wird als Substrat 21 eine Lichtleiterfaser aus SiO₂-Glas verwendet (s. Fig. 3). Auf das Substrat 21 wird eine Schicht 22 einer dotierten Ausgangssubstanz aufgebracht. Die Schicht 22 wird auf eine Stirnfläche 211 der Lichtleiterfaser aufgebracht. Die Schicht 22 wird z. B. durch Aufdampfen von mit Mangan (Mn) dotiertem Zink (Zn) gebildet.

In einer Sauerstoffatmosphäre, d. h. in reinem Sauerstoff oder in Luft, reagiert die Ausgangssubstanz der Schicht 22 bei 1200 °C mit dem SiO₂ des Substrats 21 zu Zn₂SiO₄. Dadurch wird eine Leuchtstoffschicht 23 an dem Ende der Lichtleiterfaser gebildet, an dem die Schicht 22 aufgebracht wurde. Das entsprechende Ende der Lichtleiterfaser wird dadurch in die Leuchtstoffschicht 23, die ein Szintillationselement darstellt, umgewandelt. Die Leuchtstoffschicht 23 ist fest mit der Lichtleiterfaser verbunden.

Als Schicht 22 kann auch hier, wie anhand von Fig. 1 und 2 beschrieben, eine Schicht aus Zinkoxid, Gadolinium oder Gadoliniumoxid verwendet werden.

In dem anhand von Fig. 3 und 4 beschriebenen Ausführungsbeispiel kann als Substrat 21 statt einer einzelnen Lichtleiterfaser auch ein Lichtleiterfaserbündel 31 verwendet werden (s. Fig. 5). Dabei wird auf jeder Lichtleiterfaser des Bündels auf eine Stirnfläche eine Schicht einer dotierten Ausgangssubstanz, z. B. Zink, aufgebracht. Durch Reaktion bei 1200 °C in einer Sauerstoffatmosphäre zwischen dem Zink und dem SiO₂ der Lichtleiterfasern entsteht eine Leuchtstoffschicht 33 aus Zn₂SiO₄. In diesem Fall werden gleichzeitig eine Vielzahl von Szintillationselementen jeweils an einem Ende einer Lichtleiterfaser erzeugt. Die Anordnung der Szintillatorelemente zueinander entspricht der Anordnung der Lichtleiterfasern. Die Ortsauflösung die mit diesen Szintillatorelementen erzielt werden kann, ist durch den Durchmesser der verwendeten Lichtleiterfaser vorgegeben.

Der Dicke der hergestellten Leuchtstoffschicht richtet sich jeweils nach dem Einsatz des hergestellten Szintillationselementes. Für den Einsatz in Röntgenbildverstärkern werden Schichtdicken aus Zn₂SiO₄ von z. B. 3 »m verwendet. Dazu wird in dem erfindungsgemäßen Herstellverfahren die Schicht der dotierten Ausgangssubstanz Zn in einer Dicke von z. B. 5 bis 6 »m aufgedampft.

## Patentansprüche

1. Verfahren zur Herstellung einer Leuchtstoffschicht auf einem Substrat,
- bei dem auf dem aus SiO₂-Glas bestehenden Substrat (11, 21, 31) eine Schicht (12, 22) aus einer dotierten Ausgangssubstanz aufgebracht wird,
- bei dem die Leuchtstoffschicht (13, 23, 33) durch Reaktion der Ausgangssubstanz mit SiO₂ des Substrats (11, 21, 31) in einem Temperprozeß bei einer Reaktionstemperatur in sauerstoffhaltiger Atmosphäre zu einem Silikat der Ausgangssubstanz erzeugt wird,
- bei dem das SiO₂-Glas des Substrats (11, 21, 31) einen Erweichungspunkt oberhalb der Reaktionstemperatur aufweist.

2. Verfahren nach Anspruch 1,
bei dem die Schicht (12, 22) aus der dotierten Ausgangssubstanz durch Aufdampfen aufgebracht wird.

3. Verfahren nach Anspruch 1 oder 2,
bei dem die Schicht (12, 22) aus der dotierten Ausgangssubstanz ein Oxid der Ausgangssubstanz enthält.

4. Verfahren nach einem der Ansprüche 1 bis 3,
bei dem die Ausgangssubstanz Zn oder Zinkoxid ist und bei dem der Temperprozeß bei mindestens 900 °C durchgeführt wird.

5. Verfahren nach Anspruch 4,
bei dem als Dotierstoff mindestens einer der Stoffe Bi und Mn verwendet wird.

6. Verfahren nach einem der Ansprüche 1 bis 3,
bei dem die Ausgangssubstanz Gd oder Gd₂O₃ ist und bei dem der Temperprozeß bei mindestens 900 °C durchgeführt wird.

7. Verfahren nach Anspruch 6,
bei dem als Dotierstoff ein Element oder ein Oxid der seltenen Erden verwendet wird.

8. Verfahren nach einem der Ansprüche 1 bis 7,
bei dem das Substrat (11, 21, 31) mit der Leuchtstoffschicht (13, 23, 33) nach dem Temperprozeß kontrolliert abgekühlt wird, so daß der Temperaturbereich zwischen 500 °C und 200 °C mit weniger als 100 °C pro Stunde durchlaufen wird.

9. Verfahren nach einem der Ansprüche 1 bis 8,
bei dem als Substrat (11) eine SiO₂-Glasplatte verwendet wird.

10. Verfahren nach einem der Ansprüche 1 bis 8,
bei dem als Substrat (21, 31) mindestens eine Lichtleiterfaser aus SiO₂-Glas verwendet wird und bei dem die Schicht (22) aus der dotierten Ausgangssubstanz auf eine Stirnfläche (211) der Lichtleiterfaser aufgebracht wird.

11. Verfahren nach Anspruch 10,
bei dem die Lichtleiterfaser (21) monomodig ist.

## Claims

1. Process for producing a phosphor layer on a substrate,
- in which a layer (12, 22) composed of a doped starting substance is applied to the substrate (11, 21, 31) comprising SiO₂ glass,
- in which the phosphor layer (13, 23, 33) is produced by reaction of the starting substance with SiO₂ of the substrate (11, 21, 31) to form a silicate of the starting substance in a heat-treatment process at a reaction temperature in an oxygen-containing atmosphere,
- in which the SiO₂ glass of the substrate (11, 21, 31) has a softening point above the reaction temperature.

2. Process according to Claim 1, in which the layer (12, 22) composed of doped starting substance is applied by vapor deposition.

3. Process according to Claim 1 or 2, in which the layer (12, 22) composed of the doped starting substance contains an oxide of the starting substance.

4. Process according to any of Claims 1 to 3, in which the starting substance is Zn or zinc oxide and in which the heat-treatment process is carried out at at least 900°C.

5. Process according to Claim 4, in which at least one of the substances Bi and Mn is used as dopant.

6. Process according to any of Claims 1 to 3, in which the starting substance is Gd or Gd₂O₃ and in which the heat-treatment process is carried out at at least 900°C.

7. Process according to Claim 6, in which an element or an oxide of the rare earths is used as dopant.

8. Process according to any of Claims 1 to 7, in which the substrate (11, 21, 31) with the phosphor layer (13, 23, 33) is cooled in a controlled manner after the heat-treatment process so that the temperature range between 500°C and 200°C is traversed at less than 100°C per hour.

9. Process according to any of Claims 1 to 8, in which an SiO₂ glass plate is used as substrate (11).

10. Process according to any of Claims 1 to 8, in which at least one optical waveguide fiber composed of SiO₂ glass is used as substrate (21, 31) and in which the layer (22) composed of the doped starting substance is applied to an end face (211) of the optical waveguide fiber.

11. Process according to Claim 10, in which the optical waveguide fiber (21) is monomodal.

## Revendications

1. Procédé d'application une couche de substance luminescente sur un substrat, dans lequel
- on dépose sur le substrat (11,21,31) en un verre à base de SiO₂, une couche (12,22) en une substance de départ dopée,
- on produit la couche de substance luminescente (13,23,33) en faisant réagir la substance de départ avec le SiO₂ du substrat (11,21,31) lors d'un processus de recuit à une température de réaction dans une atmosphère contenant de l'oxygène, pour former un silicate de la substance de départ,
- le verre à base de SiO₂ du substrat (11,21,31) a un point de ramollissement supérieur à la température de réaction.

2. Procédé suivant la revendication 1, dans lequel on dépose en phase vapeur la couche (12,22) en la substance de départ dopée.

3. Procédé suivant la revendication 1 ou 2, dans lequel la couche (12,22) en la substance de départ dopée contient un oxyde de la substance de départ.

4. Procédé suivant l'une des revendications 1 à 3, dans lequel la substance de départ est du Zn ou de l'oxyde de zinc et on effectue l'opération de recuit à au moins 900°C.

5. Procédé suivant la revendication 4, dans lequel on utilise comme substance dopée au moins l'une des substances que sont Bi et Mn.

6. Procédé suivant l'une des revendications 1 à 3, dans lequel la substance de départ est du Gd ou du Gd₂O₃ et on effectue l'opération de recuit à au moins 900°C.

7. Procédé suivant la revendication 6, dans lequel on utilise comme substance dopante un élément ou un oxyde des terres rares.

8. Procédé suivant l'une des revendications 1 à 7, dans lequel on refroidit d'une manière contrôlée le substrat (11,21,31) muni de la couche de substance luminescente (13,23,33) après l'opération de recuit de manière à passer dans l'intervalle de températures comprises entre 500°C et 200°C à raison de moins de 100°C par heure.

9. Procédé suivant l'une des revendications 1 à 8, dans lequel on utilise comme substrat (11) une plaque de verre à base de SiO₂.

10. Procédé suivant l'une des revendications 1 à 8, dans lequel on utilise comme substrat (21,31) au moins une fibre conductrice de lumière en verre à base de SiO₂ et on dépose la couche (22) en la substance de base dopée sur une surface frontale (211) de la fibre conductrice de lumière.

11. Procédé suivant la revendication 10, selon lequel la fibre conductrice de lumière (21) est monomode.
